# EUROPEAN PATENT SPECIFICATION

(11) **EP 2 619 953 B1**
(45) Date of publication and mention of the grant of the patent: **27.12.2017**
(21) Application number: 11826622.0
(22) Date of filing: 23.06.2011
(51) Int. Cl.: H04L 12/70, H04M 3/00, H04L 12/717, H04L 12/715, H04L 12/751

(54) **A CONTROL APPARATUS, A COMMUNICATION SYSTEM, A COMMUNICATION METHOD AND A RECORDING MEDIUM HAVING RECORDED THEREON A COMMUNICATION PROGRAM**
STEUERVORRICHTUNG, KOMMUNIKATIONSSYSTEM, KOMMUNIKATIONSVERFAHREN UND AUFZEICHNUNGSMEDIUM MIT EINEM DARAUF AUFGEZEICHNETEN KOMMUNIKATIONSPROGRAMM
APPAREIL DE COMMANDE, SYSTÈME DE COMMUNICATION, PROCÉDÉ DE COMMUNICATION ET SUPPORT D'ENREGISTREMENT SUR LEQUEL EST ENREGISTRÉ UN PROGRAMME DE COMMUNICATION

(30) Priority: 22.09.2010 JP 2010212477
(43) Date of publication of application: 31.07.2013
(73) Proprietor: NEC Corporation, Tokyo 108-8001 (JP)
(72) Inventor: AKIYOSHI, Ippei, Tokyo 108-8001 (JP)
(74) Representative: Reeve, Nicholas Edward
(86) International application number: PCT/JP2011/064991
(87) International publication number: WO 2012/039176

(56) References cited:
- WO-A1-2010/090182
- WO-A1-2010/090182
- JP-A- 2005 322 107
- US-A1- 2002 126 667
- US-A1- 2005 111 465
- US-A1- 2006 029 076

## Description

The present invention relates to a control apparatus in a network for performing communication, a communication system, a communication method and a recording medium having recorded thereon a communication program.

In recent years, a lot of technologies for providing various services by a server in response to communication from a client (a user) have been developed. In a system which provides services to a client, load balancing and scalability or the like need to be considered. For the purpose of retaining such load balancing and scalability, there is technology which commonly uses a single identifier such as an IP (Internet Protocol) address or the like among a plurality of servers. As an example, Japanese Patent Application Laid-Open No. 2008-219400 is mentioned.

According to the technology disclosed in the JP2008-219400, a relaying apparatus in a network manages a table in which an IP address of an information processing apparatus, which is a transfer destination, is correlated to a physical port which connects with the information processing apparatus. The relaying apparatus transfers a received packet according to this table. As a result, even if the same IP address is assigned to a plurality of information processing apparatus, it becomes possible to perform communication.

The OpenFlow Switch Specification Version 1.0.0 (Wire Protocol 0x01), December 31, 2009, [searched on September 2, 2010], the internet URL:http://www.openflowswitch.org/documents/openflow-spec-v1.0.0.pdf will also be referred to herein as Non-Patent Literature 1.

In the technology disclosed in JP2008-219400, because the information processing apparatus is identified by the correspondence relation between a physical port of the relaying apparatus and an IP address of the information processing apparatus, there is a problem that a destination is fixed and cannot be selected.

WO2010/090182 also in the name of the present applicant discloses an application switch system where relay processing in the data processing of network traffic is distributed over a wide area.

US2005/111465 discusses an InfiniBand switch including a forwarding table, a plurality of DLIDs and a set of forwarding instructions in the forwarding table. Each of the plurality of DLIDs corresponds to one of a plurality of routing trees and one of a plurality of end nodes in a network.

US2006/029076 discloses a method for optimally routing specific service in network. Information about service contents provided by servers is registered or updated by each of routing nodes by exchanging said information through use of a routing protocol used in controlling a path among the routing nodes.

US2002/126667 discloses a packet relaying apparatus.

We have therefore appreciated that it would be desirable to provide a control apparatus, a communication system, a communication method and a recording medium having recorded thereon a communication program, which are capable of solving the problem mentioned above.

### SUMMARY OF THE INVENTION

The invention is defined in the independent claims to which reference should now be made. Advantageous features are set forth in the dependent claims.

According to the present invention, it becomes possible to select a communication destination among a communication apparatus group which includes communication apparatuses each having the same identifier as a communication destination based on a connection relationship between a communication source and the communication apparatus group.

### BRIEF DESCRIPTION OF DRAWINGS

Fig. 1 is a figure showing a system configuration of the first embodiment.
Fig. 2 is a figure showing a system configuration of the second embodiment.
Fig. 3 is a figure showing configuration of the path control section.
Fig. 4 is a figure showing composition of the table for communication terminal location management.
Fig. 5 is a figure showing composition of the table for service node location management.
Fig. 6 is a figure showing composition of the table for port and server group management.
Fig. 7 is a figure showing composition of the table for service and representative MAC address management.
Fig. 8 is a sequence chart showing operation of the second embodiment.
Fig. 9 is a flowchart showing operation of the second embodiment.
Fig. 10 is a sequence chart showing operation of the second embodiment.
Fig. 11 is a figure showing a system configuration of the third embodiment.
Fig. 12 is a sequence chart showing operation of the third embodiment.
Fig. 13 is a flowchart showing operation of the third embodiment.
Fig. 14 is a sequence chart showing operation of the third embodiment.
Fig. 15 is a figure showing a system configuration example by the second embodiment.

### DESCRIPTION OF EMBODIMENTS

Hereinafter, the exemplary embodiments of the present invention will be described in detail using the drawings.

### Exemplary embodiment 1

### (CONFIGURATION)

The first exemplary embodiment of the present invention will be described in detail with reference to the drawings.

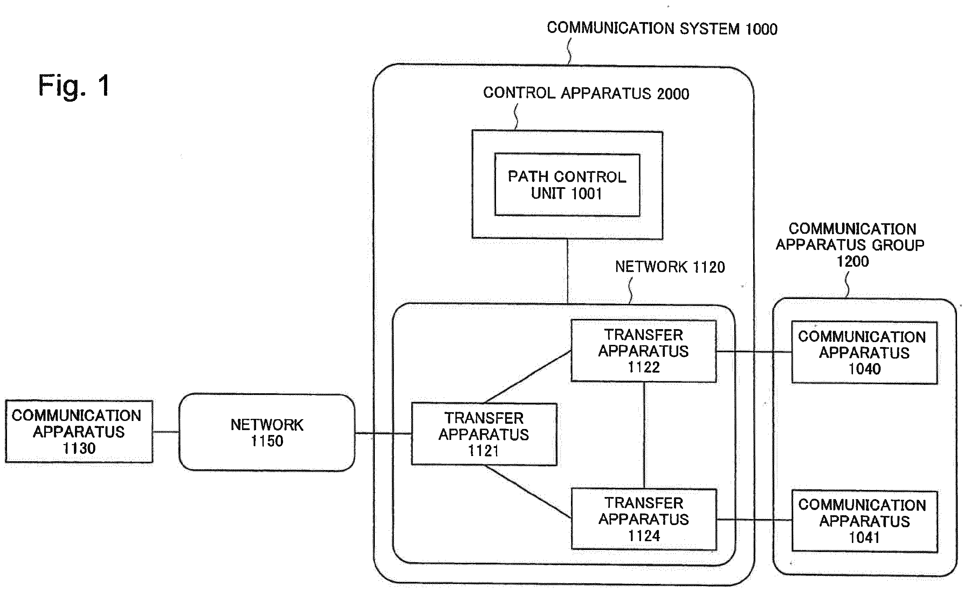

Fig. 1 is a block diagram showing a system according to this exemplary embodiment. Referring to Fig. 1, a communication system 1000 of the first exemplary embodiment includes a control apparatus 2000 and a network 1120. The network 1120 includes a transfer apparatus 1121, a transfer apparatus 1122 and a transfer apparatus 1124.

A communication apparatus group 1200 connects with the communication system 1000. The communication apparatus group 1200 includes a communication apparatus 1040 and a communication apparatus 1041. The communication apparatus 1040 connects with the communication system 1000 via the transfer apparatus 1122. Similarly, the communication apparatus 1041 connects with the communication system 1000 via the transfer apparatus 1124. The communication apparatus 1040 and the communication apparatus 1041 have a certain identical identifier.

In an example of Fig. 1, although the number of the communication apparatus included in the communication apparatus group 1200 is two, it may be equal to or more than three. Similarly, in an example of Fig. 1, although two communication apparatuses 1040 and 1041 are shown as a communication apparatus having the same identifier, there may be equal to or more than three communication apparatuses.

Further, a communication apparatus 1130 connects with the communication system 1000 via a network 1150. According to the first exemplary embodiment, it will describe a case where the communication apparatus 1130 performs communication using the identifier provided in the communication apparatus 1040 and the communication apparatus 1041 as a destination.

The control apparatus 2000 controls the communication system 1000. Also, the control apparatus 2000 includes a path control section 1001.

The path control unit 1001 selects any one of the communication apparatus 1040 and the communication apparatus 1041 each having the same identifier, based on a connection relationship between the communication apparatus 1130 and the communication apparatus group 1200. After that, the path control unit 1001 sets a process corresponding to a route from the communication apparatus 1130 to the selected communication apparatus to each transfer apparatus in the network 1120.

### (EFFECTS)

As it has been described above, according to the first exemplary embodiment, the path control unit 1001 selects one communication apparatus out of the communication apparatuses 1040 and 1041 which becomes a destination based on a connection relationship between the communication apparatus group 1200, which includes the communication apparatuses 1040 and 1041, and the communication apparatus 1130. Also, the path control unit 1001 sets a process corresponding to a route from the communication apparatus 1130 to the selected communication apparatus to each transfer apparatus in the network 1120.

By the above mentioned operation, it becomes possible to select a communication destination, based on a connection relationship between a communication source and the communication apparatus group 1200, among the communication apparatus group 1200 which includes the communication apparatuses (1040 and 1041) each having the same identifier which is a destination from the communication apparatus 1130.

### <Exemplary embodiment 2>

The second exemplary embodiment of the present invention will be described in detail with reference to the drawings.

### (OVERALL STRUCTURE)

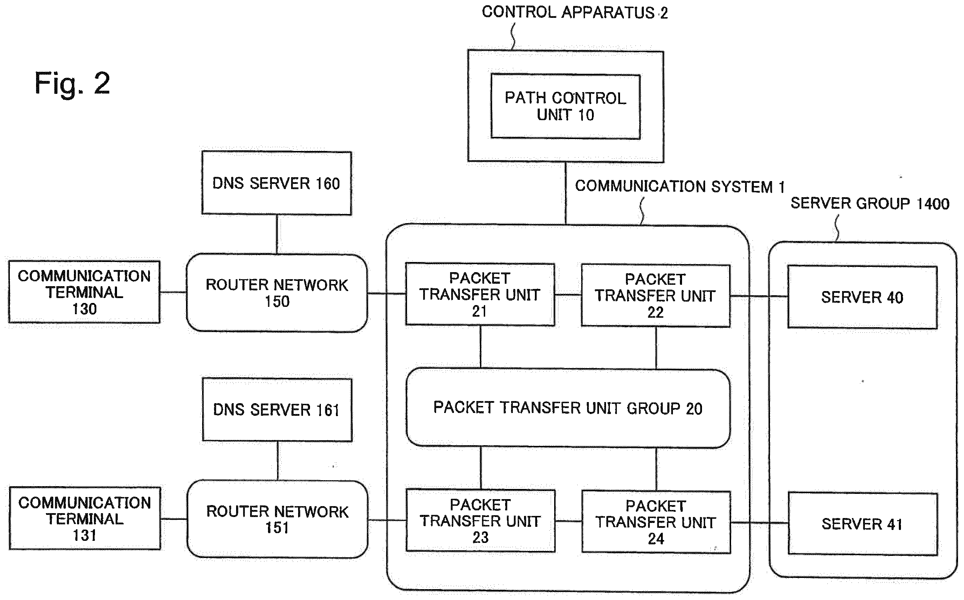

Fig. 2 is a block diagram showing a system according to the second exemplary embodiment. Referring to Fig. 2, a communication system 1 of the second exemplary embodiment includes a path control unit 10, a packet transfer unit group 20, a packet transfer unit 21, a packet transfer unit 22, a packet transfer unit 23 and a packet transfer unit 24.

The path control unit 10 controls communication paths in the communication system 1. As shown in Fig. 2, the path control unit 10 may be included in an independent control apparatus 2. The description about the path control unit 10 will be made later.

The packet transfer unit group 20 is a network which is constituted by at least one packet transfer unit being connected.

The packet transfer units 21-24 connect with a router network 150, a router network 151 and a server group 1400. Therefore, the packet transfer units 21-24 can be called edge nodes of the communication system 1 which are located in a boundary of the communication system 1 and connect with an outside network of the communication system 1.

Also, the packet transfer units 21-24 have a packet transfer rule table which stores packet transfer rules (not shown in a figure). In the packet transfer rule, a matching key for identifying a packet is correlated to a content of process for a packet (the process is, for example, transferring to a specific port, flooding or discarding or the like). When a packet is received, the packet transfer units 21-24 search for the packet transfer rule having a matching key which is suitable for the received packet from the packet transfer rule table.

The process according to a content of process corresponding to the searched packet transfer rule is performed.

Further, each packet transfer unit may be constituted as an independent apparatus (such as a switch, a router or the like).

Also, the packet transfer units 21-24 may be equipped with a delete function of a packet transfer rule as follows. As an example of this function, it is mentioned that whenever the packet transfer units 21-24 process a packet, the packet transfer units 21-24 reset a timer (time-out information) in a field which indicates a content of process of the corresponding packet transfer rule. The packet transfer units 21-24 delete the corresponding packet transfer rule from the packet transfer rule table when the timer becomes 0. By this function, it prevents a situation that an unintentional content of process is carried out due to an unused packet transfer rule being left permanently.

The server group 1400 includes a server 40 and a server 41. The server 40 and the server 41 are servers which provide a certain service A for the other party of communication and connect with the communication system 1 via a network. The server 40 and the server 41 hold a database required to provide the service A. The server 40 and the server 41 have the same IP address which is corresponding to the service A. Henceforth, it will be described by assuming that the server 40 and the server 41 provide the same service A and have the same IP address #A.

Henceforth, although it will be described by assuming that the server 40 and the server 41 provide the same service A, it is not limited to this. The second exemplary embodiment can be applied to a case where the same or similar kind of communication is performed between a server and a communication terminal. As an example of the similar kind of communication, it is mentioned that the server 40 provides high-speed communication and the server 41 provides low-speed communication when the communication of the same contents is performed between the server and the communication terminal.

The communication terminal 130 and the communication terminal 131 connect with the server 40 or the server 41 via the router network 150, the router network 151 and the communication system 1. The communication terminal 130 and the communication terminal 131 communicate with the server 40 or the server 41, and get the service A. As an example of the communication terminal, it may be a user terminal, a client terminal or a server or the like.

The router network 150 and the router network 151 are networks in which a plurality of routers for packet transfer exists. A DNS (Domain Name System) server 160 and a DNS server 161 are connected to the router network 150 and the router network 151 respectively.

The DNS server 160 and the DNS server 161 are servers for resolving an IP address from a Fully Qualified Domain Name (FQDN). According to the second exemplary embodiment, the DNS servers 160 and 161 always provide the IP address #A as an answer for an FQDN of the server which provides the service A in spite of conditions (a location of the communication terminal which has requested IP address resolution, load status of the server, or the like).

### (CONFIGURATION OF THE PATH CONTROL UNIT 10)

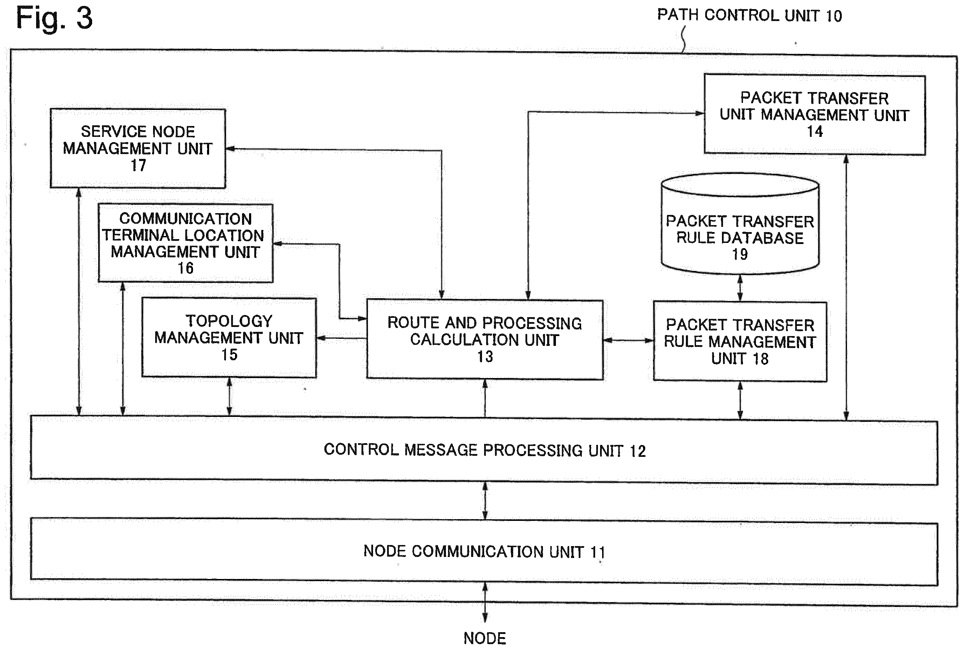

Fig. 3 is a block diagram showing a detailed structure of the path control unit 10 of Fig. 2. Referring to Fig. 3, the path control unit 10 includes a node communication unit 11, a control message processing unit 12 and a route and process calculation unit 13. At the same time, the path control unit 10 is constituted by including a packet transfer unit management unit 14, a topology management unit 15, a communication terminal location management unit 16, a service node management unit 17, a packet transfer rule management unit 18 and a packet transfer rule database (Data Base :DB) 19. Hereinafter, details of each function will be described.

The node communication unit 11 communicates with the packet transfer unit group 20 and the packet transfer units 21-24.

The control message processing unit 12 analyzes a control message received from the packet transfer unit group 20 and the packet transfer units 21-24 and conveys control message information to a relevant process function in the path control unit 10.

The route and process calculation unit 13 seeks a packet transfer route and a processing content to be performed by the packet transfer unit group 20 and the packet transfer units 21-24 on the packet transfer route based on location information on a communication terminal being managed by the communication terminal location management unit 16, location information on a server being managed by the service node management unit 17, and network topology information established in the topology management unit 15.

The packet transfer unit management unit 14 manages abilities of the packet transfer unit which is being controlled by the path control unit 10. As for abilities of the packet transfer unit, it is mentioned that, for example, the number of ports, types of ports and types of processing contents supported by each packet transfer unit, or the like. Further, the types of ports do not care in the second exemplary embodiment. As well as a physical port like an optical fiber and a coaxial cable or the like, a logical channel like a VPN (Virtual Private Network) tunnel or the like may be regarded as a port virtually.

The topology management unit 15 establishes and manages the network topology information. The topology management unit 15 collects connection relationships among the packet transfer unit group 20 and the packet transfer units 21-24 via the node communication unit 11. The topology management unit 15 establishes and manages the network topology information based on the collected connection relationships.

The communication terminal location management unit 16 manages that the communication terminals 130 and 131 connected with the communication system 1 are being connected to which port of which packet transfer unit in the communication system 1. For example, this location management is performed based on new packet detection notification and flow deletion notification from a packet transfer unit. Description will be made later of the new packet detection notification and the flow deletion notification.

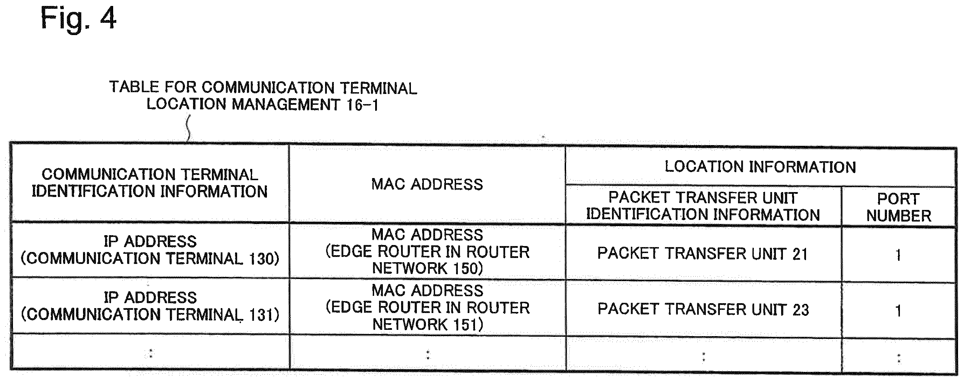

Fig. 4 is a figure showing an example of a table held in the communication terminal location management unit 16. The table for communication terminal location management 16-1 of Fig. 4 includes communication terminal identification information, a MAC (Media Access Control) address corresponding to each communication terminal and location information.

The communication terminal identification information is an identifier for identifying a communication terminal, and as an example of Fig. 4, it uses an IP address of a communication terminal. When information other than an IP address is used as the communication terminal identification information, it may add information which indicates an IP address of a communication terminal separately to the table for communication terminal location management 16-1.

The MAC address corresponding to each communication terminal is a source MAC address of the packet which has entered into the communication system 1. According to the second exemplary embodiment, the MAC address of an edge router (not shown in Fig. 2) which is adjacent to the communication system 1, and exists in the router network 150 or the router network 151 is used.

The location information on a communication terminal is the information which indicates a connection point of the communication terminal and the communication system 1. The location information on a communication terminal includes packet transfer unit identification information and a port number. The packet transfer unit identification information uses an identifier given to each packet transfer unit. Specifically, it is mentioned that an IP address, a MAC address or other specific identifier or the like given to a packet transfer unit.

In an example of Fig. 4, information corresponding to the communication terminal 130 and the communication terminal 131 is stored in the table for communication terminal location management 16-1. For example, as the communication terminal identification information on the communication terminal 130, the IP address is stored. As a MAC address, the MAC address of an edge router of the router network 150 is stored. As the location information, the identifier of the packet transfer unit 21 which is a connection point of the communication terminal 130 to the communication system 1 and the port number "1" are stored.

The service node management unit 17 manages a connection relationship between the service node, which is connecting with the communication system 1, and the communication system 1. Also, the service node management unit 17 manages the connection relationship between the communication system 1 and the service node for each of services. In the second exemplary embodiment, the service node is the server 40 and the server 41. This management is performed, for example, based on the new packet detection notification and the flow deletion notification or the like from the packet transfer unit. The detailed description of such notifications will be made later.

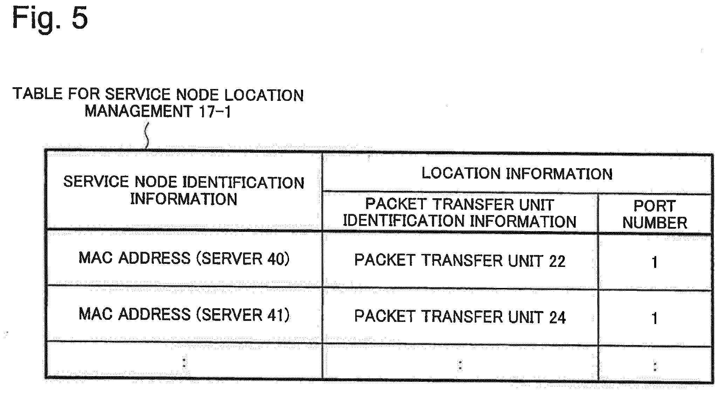

Figs. 5-7 show an example of tables held in the service node management unit 17. The table for service node location management 17-1 of Fig. 5 is a table for location management of the service node, and the location information is correlated with the service node identification information.

The service node identification information is an identifier for identifying a service node, and it uses a MAC address of a server as an example of Fig. 5. When information other than a MAC address is used as the service node identification information, it may add information which indicates a MAC address of a server separately to the table for service node location management 17-1.

The location information is the information which indicates a connection point of a service node and the communication system 1, and is constituted by combination of the packet transfer unit identification information and a port number. Further, the packet transfer unit identification information is the same one as the table for communication terminal location management 16-1 of Fig. 4.

In an example of Fig. 5, entries relating to the server 40 and the server 41 are written. For example, as the service node identification information on the server 40, the MAC address is stored. Also, the identifier of the packet transfer unit 22 which is a connection point of the server 40 to the communication system 1 and the port number "1" are stored as the location information.

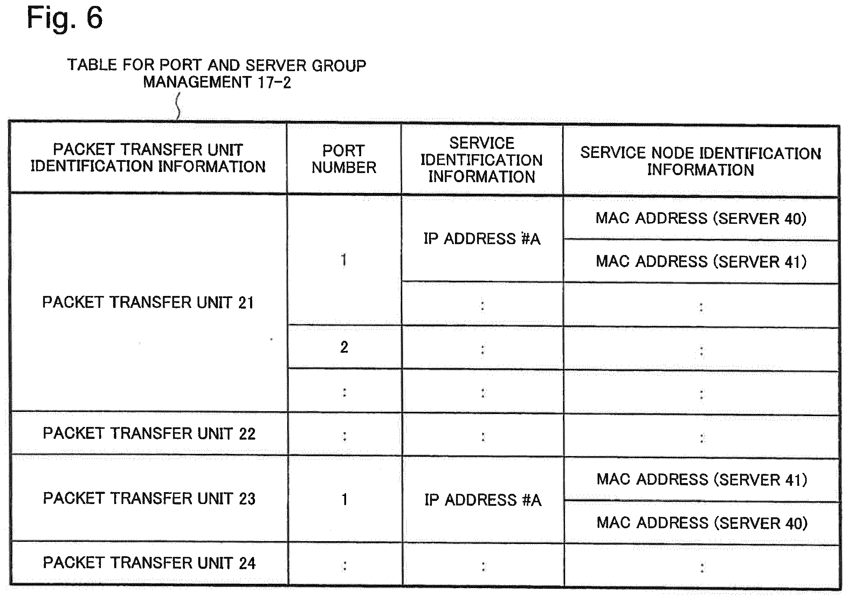

The table for port and server group management 17-2 of Fig. 6 is a table for managing a correspondence relationship between a packet transfer unit which exists in a boundary of an external network (here, the router networks 150 and 151) and a service node which can be accessed through a specific port of the packet transfer unit. According to the second exemplary embodiment, a service node corresponding to a packet transfer unit is managed for each of services. The table for port and server group management 17-2 includes the packet transfer unit identification information, a port number, the service identification information and the service node identification information.

The packet transfer unit identification information and a port number are the same ones as the table for communication terminal location management 16-1 of Fig. 4 and the table for service node location management 17-1 of Fig. 5.

The service identification information is the information for identifying a service which is provided by a server, and an IP address is used in the second exemplary embodiment. As the service identification information, information other than an IP address can be used. In this case, it may add information which indicates an IP address assigned to a service separately to this table. The service node identification information indicates a service node group which is permitted to be accessed from a port of the relevant packet transfer unit. As mentioned above, according to the second exemplary embodiment, both of the server 40 and the server 41 provide the same service A, and the IP address is #A.

According to the second exemplary embodiment, it is supposed that the path control unit 10 has a policy that a priority order is set to a service node and a service node having a high priority order is accessed on a priority basis. As a basis for setting of the priority order, for example, a policy which gives a higher priority order to a service node locating closer from a packet transfer unit is mentioned. For example, as an index for measuring closeness between a packet transfer unit and a service node, there is a method using the Round Trip Time (RTT) and a distance of the Autonomous System (AS) path. The RTT is a propagation-delay time of a message which has traveled a round trip between a certain two apparatuses for sending and receiving the message. In the second exemplary embodiment, the RTT between the server 40, 41 and the packet transfer unit 21-24 neighboring the router network 150, 151 is applied. In this case, the packet transfer unit (the packet transfer unit 21, 23 in Fig. 2) neighboring the router network notifies the path control unit 10 of a result of the periodical message transmission and reception to and from the server 40, 41. And the path control unit 10 gives a higher rank of the priority order to a server having a short RTT.

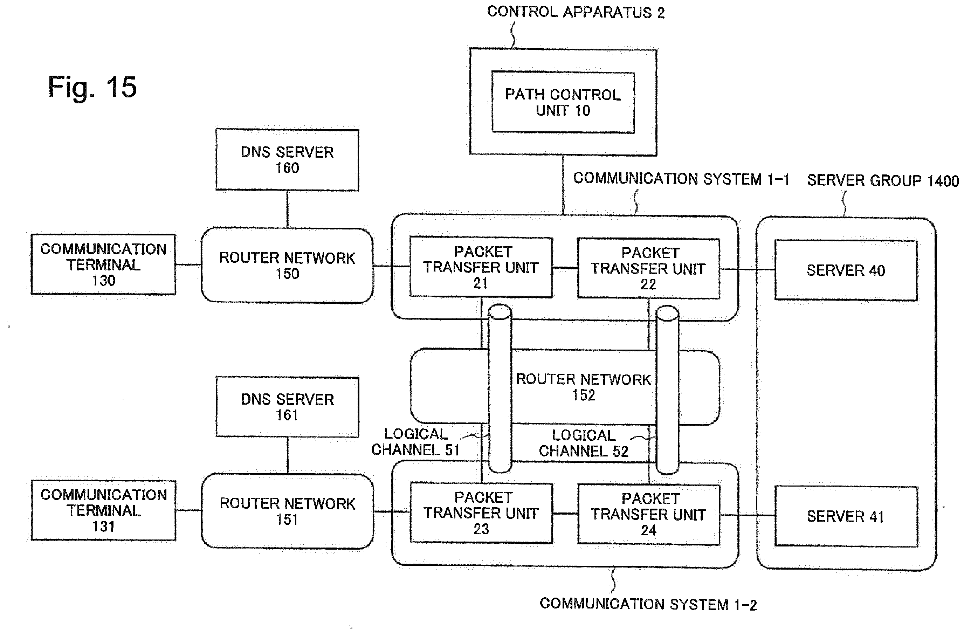

Next, the AS path is one which indicates a list of AS number through which the communication exchanging the Border Gateway Protocol (BGP) has passed until reaching the destination. Fig. 15 shows a system configuration example when the AS path is applied to the system. In this exemplary configuration, the communication system 1 exists in two different locations separated by the router network 152 as the communication system 1-1 and the communication system 1-2. It is operating as one communication system virtually by connecting between these locations by a logical channel 51 and a logical channel 52. Because the communication terminal 130, 131 and the server 40, 41 are separated each other by a router network, it is supposed that they are belonging to a different AS each other. And it can be considered that the AS path for accessing to each of the servers 40 and 41 via each of the router networks 150 and 151 neighboring the communication system 1 is compared, and a higher rank of the priority order is given to a server having a short AS path. In this exemplary configuration, when seen from the communication terminal 130, a router network existing between the communication terminal 130 and the server 40 is only the router network 150. On the other hand, there are two router networks, the router networks 150 and 152, existing between the communication terminal 130 and the server 41. Therefore, when the communication terminal 130 accesses the service A, by accessing the server 40, the AS path becomes short and the priority order becomes high.

In the table for port and server group management 17-2 of the second exemplary embodiment, a corresponding service node is managed for each port of a packet transfer unit which exists in a boundary of an external network, however, it may be managed for each packet transfer unit.

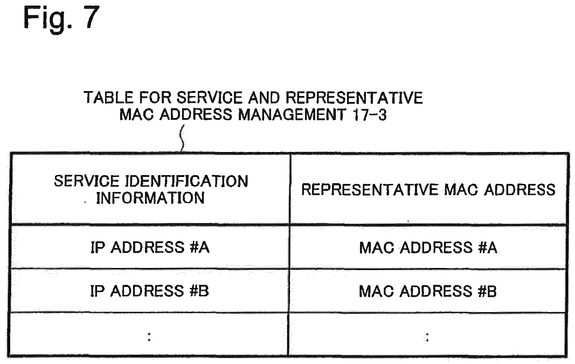

The table for service and representative MAC address management 17-3 of Fig. 7 is a table for managing a correspondence relationship between the service identification information and a "representative MAC address" and constituted by combination of the service identification information and a representative MAC address. The service identification information is similar to the table for port and server group management 17-2 of Fig. 6. According to the second exemplary embodiment, it is supposed that a MAC address of any one of service nodes among a plurality of service nodes which provide the same service is written as the "representative MAC address". For example, the MAC address of the server 40 among the server 40 and the server 41 which are service nodes for providing the service A is used. However, the representative MAC address is not limited to this, and a virtual MAC address may be used. This table for service and representative MAC address management 17-3 is used when processing a MAC address resolution request for an IP address corresponding to the service identification information from a router network, or the like.

The packet transfer rule management unit 18 manages what kind of packet transfer rule is set to each of the packet transfer units in the communication system 1. Specifically, a calculated result in the route and process calculation unit 13 is registered in the packet transfer rule DB 19 as a packet transfer rule. When a change has occurred to a packet transfer rule being set to a packet transfer unit, the packet transfer rule management unit 18 updates the registration information of the packet transfer rule DB 19 corresponding to this. Operation of such update is performed by the flow deletion notification (described later) or the like from a packet transfer unit as a trigger.

Further, in the configuration of the path control unit 10 mentioned above, when a packet transfer rule does not need to be held in the path control unit 10, the packet transfer rule DB 19 can be omitted. Also, it may adopt the configuration in which the packet transfer rule DB 19 is not provided in the path control unit 10, but is provided separately in an external server or the like.

### (OPERATION)

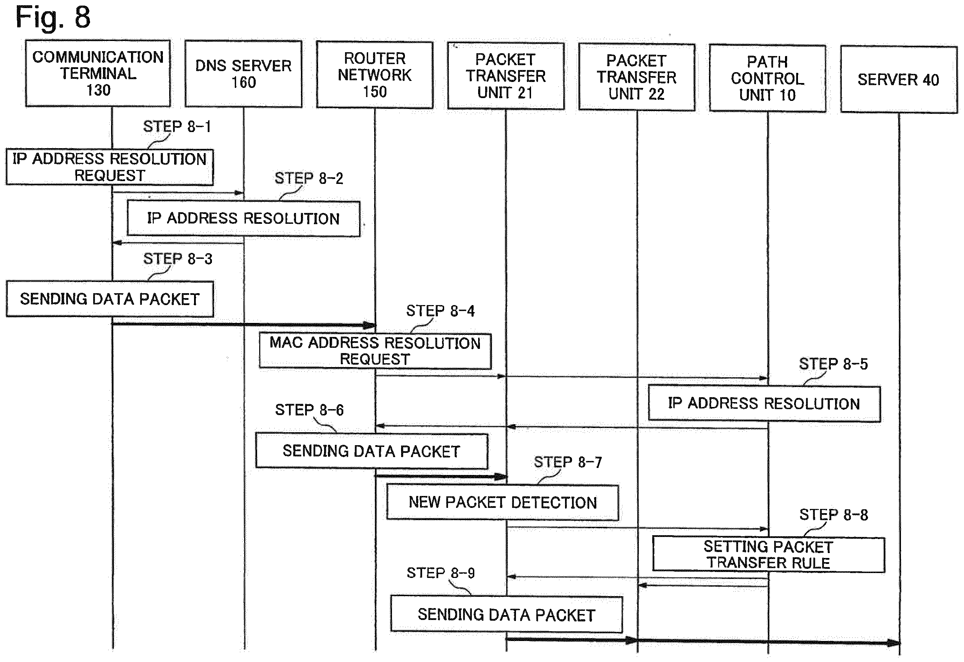

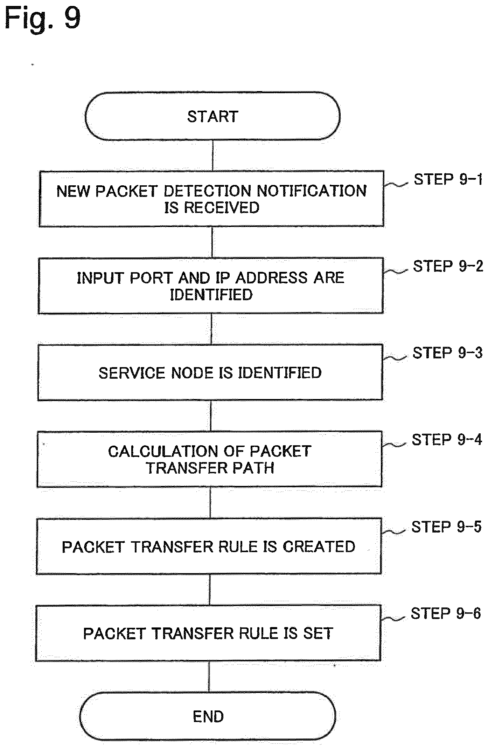

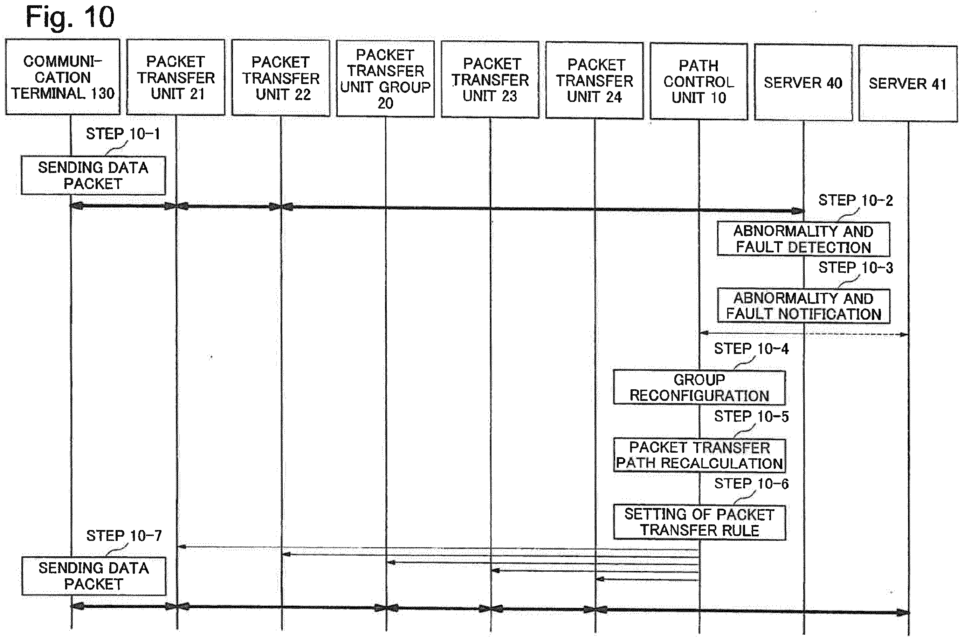

Next, operation of the second exemplary embodiment will be described in detail with reference to sequence charts of Fig. 8 and Fig. 10 and a flow chart of Fig. 9.

First, a communication procedure when the communication terminal 130 gets the service A via the router network 150 will be described using Fig. 8.

First, the communication terminal 130 communicates with the DNS server 160 (step 8-1). The communication terminal 130 acquires the IP address #A, which is an IP address of a server which provides the service A, from an FQDN which is included in a URL (Uniform Resource Locator) for providing the service A (step 8-2).

Next, the communication terminal 130 sends a data packet, which has an IP address #A as a destination address, to the router network 150 (step 8-3). When the router network 150 does not know a MAC address which is corresponding to the IP address #A and is needed for transferring the data packet having an address of the IP address #A to the communication system 1, the router network 150 sends a MAC address resolution request message to the communication system 1 (step 8-4). When the router network 150 knows a MAC address corresponding to the IP address #A, the router network 150 transfers the data packet to the communication system 1.

When the MAC address resolution request message is received, the packet transfer unit 21 transfers it to the path control unit 10.

When the MAC address resolution request message is received, the path control unit 10 acquires the MAC address #A corresponding to the IP address #A using the table for service and representative MAC address management 17-3 which is being managed in the service node management unit 17. Next, the path control unit 10 responds that a MAC address corresponding to the IP address #A is the MAC address #A by sending a MAC address resolution response message (step 8-5).

The router network 150 transfers the data packet to the communication system 1 when having resolved the MAC address corresponding to the IP address #A (step 8-6). When the data packet is received, the packet transfer unit 21 searches a packet transfer rule table and searches for a packet transfer rule corresponding to the received data packet. When the packet transfer rule corresponding to the received data packet exists, the data packet is processed according to the corresponding content of process.

Using an example of Fig. 8, we will describe a case where a packet transfer rule corresponding to the received data packet does not exist. As a typical example of the case where a packet transfer rule does not exist in the packet transfer unit 21, is a case where the packet transfer unit 21 has never received the relevant packet yet and a content of process of this packet is not set.

In such a case, the packet transfer unit 21 sends the new packet detection notification to the path control unit 10, after having buffered the received data packet (step 8-7). This new packet detection notification includes information required to identify a packet transfer rule and information on a port which has received the packet. For example, the information required to identify a packet transfer rule is a source/ destination MAC address, a source/ destination IP address or a source/ destination port number or the like. Further, an identifier of the packet transfer unit 21 which is a source of the new packet detection notification may be included in the new packet detection notification. As the identifier of the packet transfer unit 21, for example, an IP address or a MAC address or the like of the packet transfer unit 21 are considered. However, it is not limited to these as far as the packet transfer unit 21 can be identified.

Here, it is assumed that the packet transfer unit 21 buffers the received packet and sends information only required to identify a packet transfer rule to the path control unit 10. However, the packet transfer unit 21 may send not only information required to identify a transfer rule but also the received whole packet to the path control unit 10.

Next, when the new packet detection notification is received, the path control unit 10 sets a packet transfer rule to each of the packet transfer units in the communication system 1 (step 8-8).

Operation of the step 8-8 will be described more in detail using a flowchart of Fig. 9. First, the node communication unit 11 of the path control unit 10 receives the new packet detection notification (step 9-1).

Next, the control message processing unit 12 of the path control unit 10 identifies a packet transfer unit which has detected the new packet and its input port and also a destination IP address of the data packet from the information included in the new packet detection notification (step 9-2). Specifically, it identifies that the packet transfer unit which has detected the new packet is the packet transfer unit 21 and its input port is 1. Here, when an identifier of the packet transfer unit 21 is included in the new packet detection notification, it may identify a packet transfer unit by using the identifier of the packet transfer unit 21. Also, it can identify the packet transfer unit based on a source IP address (an IP address of the communication terminal 130) of the data packet. In this case, by using the table for communication terminal location management 16-1, it can identify the packet transfer unit 21 from "location information" indicated in an entry of the communication terminal 130.

Further, simultaneously with identifying the packet transfer unit and its input port, the control message processing unit 12 also identifies that a destination IP address of the data packet is #A (step 9-2). The destination IP address has been identified here because the service is identified by an IP address. However, it is not limited to only an IP address for identifying the service, but other information can also be used. In a case where the service is identified by the other information, such information needs to be identified in step 9-2.

Also, at that time, the information on the communication terminal 130 in the table for communication terminal location management 16-1 which is being managed in the communication terminal location management unit 16 is updated. When the information on the communication terminal 130 is not registered, the information on the communication terminal 130 is newly registered in the tables for communication terminal location management 16-1.

After that, the path control unit 10 searches the table for port and server group management 17-2 by using the packet transfer unit (21), the port number (1) and the service identification information (the IP address #A) as a key. As a result of the search, the server 40 having a high priority order is selected as a service node having the IP address #A, in other words a service node which provides the service A (step 9-3).

Next, a matching key of a new packet transfer rule is determined in the route and process calculation unit 13. At the same time, location of the server 40 as a destination is confirmed by using the table for service node location management 17-1 which is being managed in the service node management unit 17. The packet transfer path from the packet transfer unit 21 to the server 40 is calculated based on the location information on the server 40 (step 9-4).

Here, it is supposed that the route, "from the packet transfer unit 21 to the packet transfer unit 22, and then to the server 40" has been selected as a result of the route calculation. As a matching key of a packet, it is supposed that the following three conditions have been selected: (1) a source IP address is the same as an IP address of the communication terminal 130; (2) a destination MAC address is the same as the MAC address #A; and (3) a destination IP address is the same as the IP address #A.

Further, the route and process calculation unit 13 selects a content of process for transferring a packet along the calculated route, as a content of process corresponding to the determined matching key. In addition to this, the packet transfer unit 22 selects a content of process which indicates that when the relevant data packet is received, a destination MAC address in a header of the received data packet is converted into a MAC address of the server 40.

The route and process calculation unit 13 creates a packet transfer rule based on the selected matching key, the transfer route and the contents of process (step 9-5). Next, the packet transfer rule which has been determined is set to the packet transfer units 21 and 22, which are the packet transfer units on the route, via the control message processing unit 12 and the node communication unit 11 (step 9-6).
After setting of the packet transfer rule, the path control unit 10 registers the packet transfer rule having been set to the packet transfer units 21, 22 to the packet transfer rule management unit 18.

The above is operation of packet transfer rule setting at the time of new packet detection by the path control unit 10. Hereinafter, back to Fig. 8, a description of operation of the second exemplary embodiment will be continued.

When setting of the packet transfer rule to the packet transfer units 21 and 22 has been completed (step 8-8), the packet transfer unit 21 transfers the buffered packet in accordance with the set packet transfer rule (step 8-9). Because the packet transfer rule has already been set to the packet transfer units 21 and 22 on the transfer route of this packet, this packet is transferred in order of the packet transfer units 21, 22 and reaches the server 40.

The above is a communication procedure when the communication terminal 130 tries to get the service A for the first time. The communication procedure when the communication terminal 131 gets the service A via the router network 151 is the same procedure as above, and an IP address resolved by the DNS server is also the same IP address #A. However, it is different in a point that a server of an access destination is the server 41 because a packet transfer unit which is located in a boundary of the communication system 1 is different.

### (OPERATION AT THE TIME OF SERVER FAILURE)

Next, a communication procedure when the server 40 which provides the service A falls into communication failure will be described using Fig. 10.

First, as the initial state, it is supposed that the communication terminal 130 is communicating with the server 40 by the procedure mentioned above (step 10-1).

When the server 40 detects its own abnormality, it judges that it will stop to provide the service A soon (step 10-2). In such a case, the server 40 sends failure notification to the path control unit 10 (step 10-3). At this time, when there is state information which is needed in order to continue to provide the service A to the communication terminal 130, the server 40 also notifies the server 41. As a method of failure detection of the server 40 is, for example, that it judges by increase in its own temperature due to increase of the processing load or congestion state of the connected link, or the like. In the above-mentioned example, although it is supposed that the server 40 detects failure by itself, it is not limited to this and an operator or the like who manages the server 40 may judge.

When the failure notification from the server 40 is received, the path control unit 10 deletes information relating to the server 40 from the table for port and server group management 17-2. By deleting the information on the server 40, reconfiguration of correspondence relationships among a packet transfer unit and neighboring service nodes which provide the service for each service is performed (step 10-4).

Further, the path control unit 10 detects that the communication terminal 130 is communicating with the server 40 based on information managed by the packet transfer rule management unit 18. By using the table for port and server group management 17-2 after reconfiguration, it is decided that the server which provides the service A to the communication terminal 130 is to be changed from the server 40 to the server 41. The route and process calculation unit 13 calculates a path change (step 10-5). The route and process calculation unit 13 sets a corresponding packet transfer rule according to the changed path (step 10-6). A series of processing from calculation of a route to setting of a packet transfer rule is similar to processing from step 9-3 to step 9-6 of the above-mentioned Fig. 9, therefore, the detailed description will be omitted.

### (EFFECTS)

As it has been described above, according to the second exemplary embodiment, the path control unit 10 manages each connection relationship for each communication terminal, a server group including servers (service nodes) and the packet transfer unit. Also, the path control unit 10 selects a server which becomes a destination of a data packet among servers which provide a service requested by a received data packet from a communication terminal based on the managed connection relationship. Then, the path control unit 10 sets a process, which is corresponding to a transfer route, to a packet transfer units on the transfer route.

By the above mentioned operation, it becomes possible to select a communication destination, based on the connection relationship between a communication terminal and a server group, among servers which are the communication destinations of the communication terminal and provide the same service. Also, it becomes possible to continue to provide the service, even when a failure has occurred in a certain server, by selecting a different server which provides the same service and continuing the communication.

### <EXEMPLARY EMBODIMENT 3>

Next, the third exemplary embodiment of the present invention will be described. The third exemplary embodiment is the embodiment in which technology called OpenFlow, disclosed in the non patent literature 1 is applied to the second exemplary embodiment. OpenFlow, disclosed in the non patent literature 1, is the technology which treats communication as a flow of end to end, and performs route control, failure recovery, load balancing and optimization or the like for each flow. An OpenFlow Switch which functions as a transfer apparatus has a Secure Channel for communication with an OpenFlow Controller. The OpenFlow Switch operates in accordance with a flow-table which is directed to add or rewrite appropriately by the OpenFlow Controller. In the flow-table, a set which includes a rule (a matching key) to be checked against packet header, an "action" defining a content of process of a packet and flow statistics information is defined for each flow. This set is called a "flow entry".

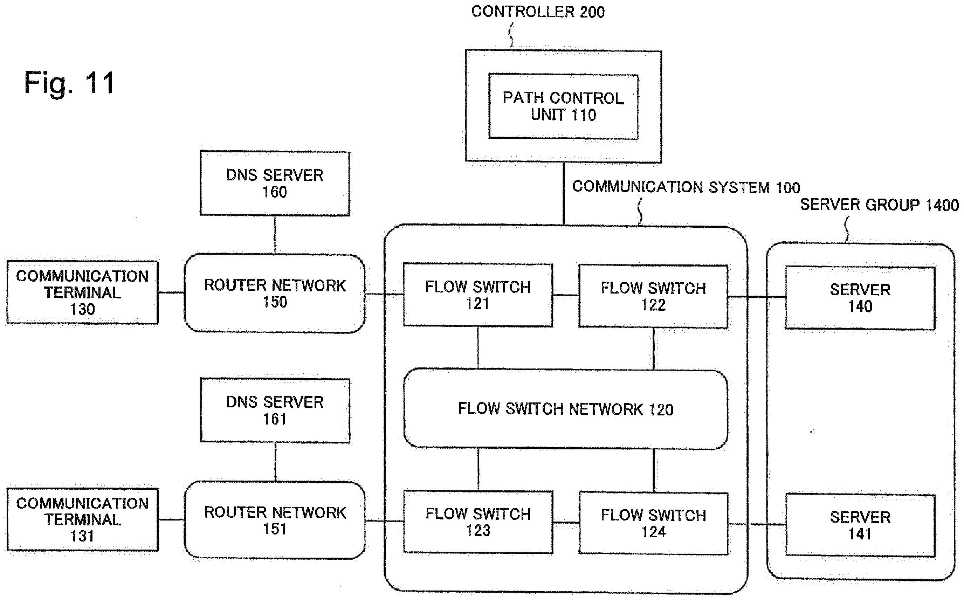

Fig. 11 is a block diagram showing a system according to the third exemplary embodiment. Referring to Fig. 11, a communication system 100 of the third exemplary embodiment includes a path control unit 110, a flow switch network 120, a flow switch 121, a flow switch 122, a flow switch 123 and a flow switch 124. Each of the above flow switches is equivalent to the OpenFlow Switch mentioned above.

Communication terminals 130 and 131 are connected to the communication system 100 respectively via router networks 150, 151. Similarly, DNS servers 160, 161 are connected to the router networks 150, 151 respectively.

Further, a server group 1400 is connected to the communication system 100. The server group 1400 includes a server 140 and a server 141. Similar to the second exemplary embodiment, it is supposed that the server 140 and the server 141 provide the service A and have the same IP address #A.

Because the configuration of the system connected to the above-mentioned communication system 100 is almost the same as that of the second exemplary embodiment, the detailed description will be omitted.

The path control unit 110 controls communication paths in the communication system 100. The path control unit 110 may be located in the controller 200 which is an independent apparatus as shown in Fig. 11.

The detailed description of the path control unit 110 will be omitted because it is equivalent to the path control unit 10 in Fig. 3, where it regards the packet transfer unit as the flow switch and it regards the packet transfer rule as the flow entry. Accordingly, henceforth, Figs. 3 to 7 will be referred when the path control unit 110 is described.

It is also possible to configure the path control unit 110 based on the OpenFlow Controller of the non patent literature 1. In this case, the communication terminal location management unit 16 and the service node management unit 17 in Fig. 3 are added to the OpenFlow Controller of the non patent literature 1.

Next, the flow switch network 120 is the network which is constituted by at least one flow switch being connected.

The flow switches 121 to 124 included in the flow switch network 120 connect with the router network 150, the router network 151, the server 140 and the server 141. Therefore, the flow switches 121 to 124 can be called as edge nodes of the communication system 100 which are located in a boundary of the communication system 100 and connect with outside networks of the communication system 100.

Further, when receiving packets, the flow switches 121 to 124 find a flow entry having a matching key, which matches the received packet, from the flow entry table which stores flow entries, and perform process according to an action corresponding to the flow entry. Transferring to a specific port, flooding and discarding or the like, can be exemplified as the action.

Also, the flow switches 121 to 124, similar to the second exemplary embodiment, reset a timer (time-out information) in an action field of relevant flow entry whenever the flow switches 121 to 124 process a packet.

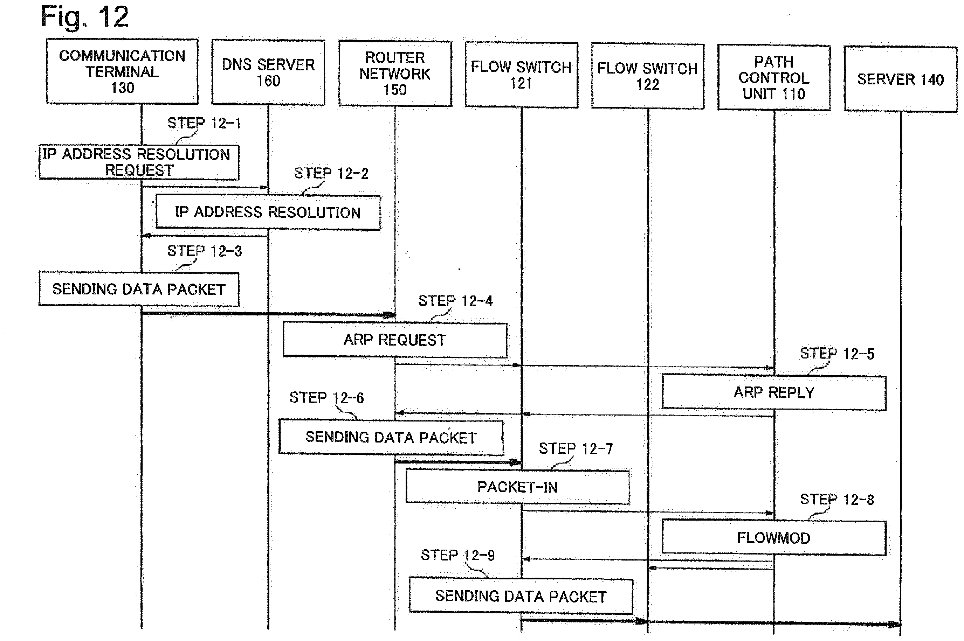

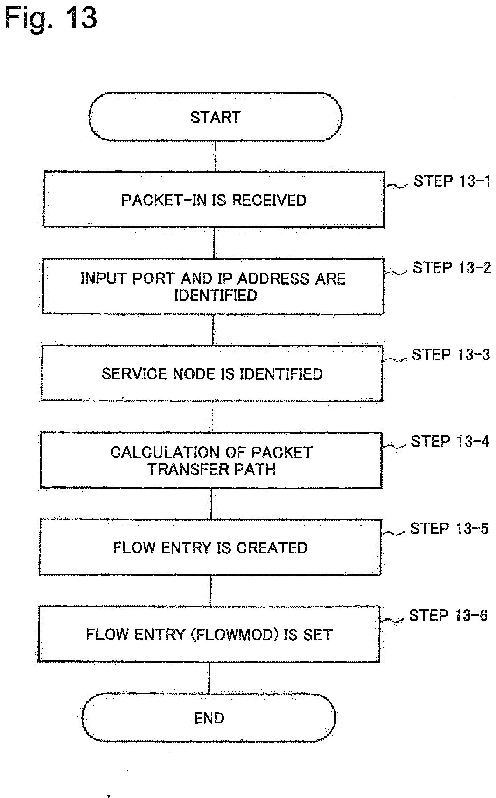

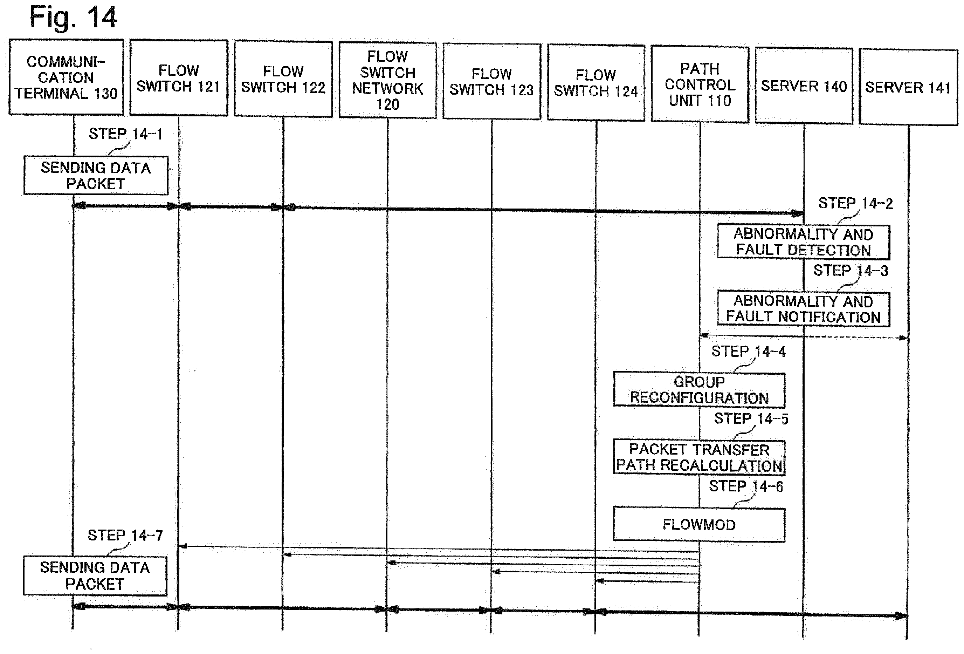

Next, operation of the third exemplary embodiment will be described with reference to sequence charts on Fig. 12 and Fig. 14 and a flow chart of Fig. 13. Further, the description will be omitted appropriately because a flow of basic operation is almost the same as that of the second exemplary embodiment.

First, a communication procedure when the communication terminal 130 is provided with the service A via the router network 150 will be described using Fig. 12.

The description of steps from Step 12-1 to Step 12-5 will be omitted because they are almost the same as the steps from step 8-1 to step 8-5 of the second exemplary embodiment (Fig. 8). However, the MAC address resolution request of step 8-4 is performed by an ARP (Address Resolution Protocol) Request in step 12-4. Similarly, the MAC address resolution of step 8-5 is performed by an ARP Reply in step 12-5.

When a MAC address corresponding to the IP address #A is resolved by the ARP Reply of step 12-5, the router network 150 transfers a data packet to the communication system 100 (step 12-6).

When the data packet is received, the flow switch 121 searches the flow entry table and searches for a flow entry corresponding to the received data packet. When the flow entry corresponding to the received data packet exists, the data packet is processed according to the corresponding action.

Using an example of Fig. 12, we will describe a case where a flow entry corresponding to the received data packet does not exist. As a typical example of the case where a flow entry does not exist in the flow switch 121, a case where the flow switch 121 has never received the relevant packet yet and the corresponding action is not set, is mentioned. In other words, it can be said that the received data packet is the first packet of a new flow in this case.

When a new flow is detected as mentioned above, the flow switch 121 sends a Packet-in message to the path control unit 110 after having buffered the received data packet. This Packet-in message is a message defined in the non patent literature 1, and this is a message to be sent to the OpenFlow controller when a new flow is detected in the OpenFlow switch. In this Packet-in message, information required to identify a flow entry and information on a port which has received the packet are included. For example, the information required to identify a flow entry is a source/ destination MAC address, a source/ destination IP address and a source/ destination port number or the like. Further, an identifier of the flow switch 121 which is a source of the Packet-in may be included in the Packet-in. As this identifier, for example, an IP address or a MAC address or the like of the flow switch 121 are considered, however, it is not limited to these as far as the flow switch 121 can be distinguished.

Here, it is assumed that the flow switch 121 buffers the received packet and sends information only required to identify a flow entry to the path control unit 110. However, the flow switch 121 may send not only information required to identify a flow entry, but also the received whole packet to the path control unit 110.

When receiving the Packet-in message, the path control unit 110 sets a flow entry by a message called FlowMod defined in the non patent literature 1 (step 12-8). The FlowMod message includes information on the flow entry to be newly registered, or information on the flow entry to be updated to the OpenFlow switch. The OpenFlow controller performs initial registration or update of flow entry of the OpenFlow switch by sending a message including these information.

Operation of the step 12-8 will be described using a flowchart of Fig. 13. Further, the description will be omitted appropriately because the flowchart of Fig. 13 is almost the same as the flowchart of Fig. 9 in the second exemplary embodiment.

First, the path control unit 110 receives the Packet-in message (step 13-1). Next, the control message processing unit 12 of the path control unit 110 identifies a flow switch which has detected the new flow and its input port and also a destination IP address of the data packet from the information included in the Packet-in message (step 13-2). Specifically, it identifies that the flow switch which has detected the new flow is the flow switch 121, and its input port is 1. Here, when an identifier of the flow switch 121 is included in the Packet-in, it may identify a flow switch by using the identifier of the flow switch 121. Also, it can identify the flow switch based on a source IP address of the data packet (an IP address of the communication terminal 130). In this case, by using the table for communication terminal location management 16-1, it can identify the flow switch 121 from "location information" indicated in the entry of the communication terminal 130.

Further, simultaneously with identifying the flow switch and its input port, the control message processing unit 12 also identifies that a destination IP address of the data packet is #A (step 13-2). The destination IP address has been identified here because the service is identified by an IP address. However, it is possible to identify the service by information other than the IP address. In a case where the service is identified by the other information, such information needs to be identified.

Also, at that time, the information on the communication terminal 130 in the table for communication terminal location management 16-1 which is being managed in the communication terminal location management unit 16 is updated. When the information on the communication terminal 130 is not registered, the information on the communication terminal 130 is newly registered in the tables for communication terminal location management 16-1.

After that, the path control unit 110 searches the table for port and server group management 17-2 by using the flow switch 121, the port number 1 and the service identification information (the IP address #A) as a key. As a result of the search, the server 140 having a high priority order is selected as a service node having the IP address #A, in other words a service node which provides the service A (step 13-3).

Next, a matching key of a new flow entry is determined in the route and process calculation unit 13. At the same time, location of the server 140 as a destination is confirmed by using the table for service node location management 17-1 which is being managed in the service node management unit 17. The packet transfer path from the flow switch 121 to the server 140 is calculated based on the location information on the server 140 (step 13-4).

Here, it is supposed that the route of "from the flow switch 121 to the flow switch 122, and then to the server 140" has been selected as a result of the route calculation. It is supposed that the following three conditions have been selected as a matching key of the flow: (1) A source IP address is the same as an IP address of the communication terminal 130; (2) a destination MAC address is the same as the MAC address #A; and (3) a destination IP address is the same as the IP address #A.

Further, the route and process calculation unit 13 selects an action for transferring a packet along the calculated route as an action corresponding to the determined matching key. In addition to this, the flow switch 122 selects an action which indicates that when the data packet corresponding to the matching key is received, a destination MAC address in a header of the data packet is converted into a MAC address of the server 140.

The route and process calculation unit 13 creates a flow entry based on the selected matching key, the transfer route and the actions (step 13-5). Next, the flow entry which has been determined is set to the flow switches 121, 122 which are the flow switches on the route by sending the FlowMod via the control message processing unit 12 and the node communication unit 11 (step 13-6).

After setting of the flow entry, the path control unit 110 registers the flow entry having been set to the flow switches 121, 122 to the packet transfer rule (flow entry) management unit 18.

The above is operation of flow entry setting at the time of new flow detection by the path control unit 110. Hereinafter, back to Fig. 12, a description of operation of this embodiment will be continued.

When setting of the flow entry to the flow switches 121, 122 has been completed (step 13-8), the flow switch 121 transfers the buffered packet according to the flow entry (step 13-9). Because the flow entry has already been set to the flow switches 121 and 122 on the transfer route of this packet, this packet is transferred in order of the flow switches 121, 122 and the packet reaches the server 140.

The above is a communication procedure when the communication terminal 130 tries to get the service A for the first time. The communication procedure when the communication terminal 131 gets the service A via the router network 151 is the same procedure as above, and an IP address resolved by the DNS server is also the same IP address #A, however, it is different in a point that a server of an access destination is the server 141 because a flow switch which is located in a boundary of the communication system 100 is different.

### (OPERATION AT THE TIME OF SERVER FAILURE)

Next, a communication procedure when the server 140 which provides the service A falls into communication failure will be described using Fig. 14.

First, as the initial state, it is supposed that the communication terminal 130 is communicating with the server 140 by the procedure mentioned above (step 14-1).

When the server 140 detects its own abnormality, it judges that it will stop to provide the service A soon (step 14-2). In such a case, the server 140 sends a failure notification to the path control unit 110 (step 14-3). At this time, when there is state information which is needed in order to continue to provide the service A to the communication terminal 130, the server 140 also notifies the server 141. As a method of failure detection of the server 140, the method in the second exemplary embodiment is mentioned. Therefore, the description will be omitted here.

When the failure notification from the server 140 is detected, the path control unit 110 deletes information relating to the server 140 from the table for port and server group management 17-2. By deleting information on the server 140, reconfiguration of correspondence relationships among a flow switch and neighboring service nodes which provide the service for each service is performed (step 14-4).

Further, the path control unit 110 detects that the communication terminal 130 is communicating with the server 140 based on information managed by the packet transfer rule management unit 18. By using the table for port and server group management 17-2 after reconfiguration, it is decided that the server which provides the service A to the communication terminal 130 is to be changed from the server 140 to the server 141. The route and process calculation unit 13 calculates a path change (step 14-5). The route and process calculation unit 13 sets a corresponding flow entry according to the changed path (step 14-6). A series of processing from calculation of a route to setting of a flow entry (FlowMod) is similar to processing from step 13-3 to step 13-6 of the above-mentioned Fig. 13, therefore, the detailed description will be omitted.

As above, the network, to which the OpenFlow is applied, has been described in the third exemplary embodiment, however, it is not limited to this. It is possible to apply the network other than OpenFlow, in which centralized control is performed by a control server or the like.

### (EFFECTS)

As it has been described above, according to the third exemplary embodiment, the path control unit 110 (or the controller 200) manages each connection relationship for each communication terminal, a server group including servers (service nodes) and the flow switch. Also, the path control unit 110 selects a server which becomes a destination of a data packet among servers which provide a service requested by a received data packet from a communication terminal based on a managed connection relationship. And, the path control unit 110 sets an action, which is corresponding to a transfer route, to a flow switch on the transfer route.

By the above mentioned operation, it becomes possible to select a communication destination, among servers which are the communication destinations of the communication terminal and provide the same service, based on a connection relationship between a communication terminal and a server group. Also, it becomes possible to continue to provide the service, even when a failure has occurred in a certain server, by selecting a different server which provides the same service and continuing the communication.

### Reference Signs List

1, 1-1, 1-2, 100 and 1000 communication system
2, 2000 control apparatus
10, 110, 1001 path control unit
20 packet transfer unit group
21, 22, 23, 24 packet transfer unit
40, 41, 140, 141 server
51, 52 logical channel
130, 131 communication terminal
150, 151, 152 router network
160, 161 DNS server
11 node communication unit
12 control message processing unit
13 route and process calculation unit
14 packet transfer unit management unit
15 topology management unit
16 communication terminal location management unit
16-1 table for communication terminal location management
17 service node management unit
17-1 table for service node location management
17-2 table for port and server group management
17-3 table for service and representative MAC address management
18 packet transfer rule management unit
19 packet transfer rule DB
200 controller
120 flow switch network
121, 122, 123, 124 flow switch
1200 communication apparatus group
1400 server group

## Claims

1. A control apparatus for controlling a network comprising:
a path control means (10, 110, 1001) for selecting a communication apparatus (40, 41, 140, 141, 1040, 1041) having an identifier as a destination communication apparatus among a communication apparatus group (1200), based on a connection relationship between the communication apparatus group (1200), which is connected to the network and includes communication apparatuses (40, 41, 140, 141, 1040, 1041) each having the same identifier, and a source communication apparatus (130, 1130) which performs communication using the identifier as a destination address, and setting a process corresponding to a path from the source communication apparatus (130, 1130) to the selected destination communication apparatus (40, 41, 140, 141, 1040, 1041) to a transfer apparatus (1121, 1122, 1124) in the network,
**characterised in that** the path control means (10, 110, 1001) comprises:
a first storage means (17-1) for storing the connection relationship between the communication apparatus and the transfer apparatus (21, 22, 23, 24, 1121, 1122, 1124) which is located in a boundary of the network;
a second storage means (17-2) for storing the communication apparatus having the same identifier among the communication apparatus group by correlating with each transfer apparatus (1121, 1122, 1124) which is located in a boundary of the network or each port provided in the transfer apparatus (1121, 1122, 1124) ; and
a selecting means for searching for the transfer apparatus (1121, 1122, 1124), which is located in a boundary of the network and is connected with the source communication apparatus (130, 1130), from the first storage means when communication using the identifier as a destination address is received, and selecting from the second storage means any one of communication apparatuses in the communication apparatus group which is corresponding to the searched transfer apparatus (1121, 1122, 1124) as the destination communication apparatus.

2. The control apparatus according to claim 1,
wherein the connection relationship includes a connection relationship between the communication apparatus group (1200) and the transfer apparatus (1121, 1122, 1124) which is located in a boundary of the network.

3. The control apparatus according to claim 1,
wherein the path control means (10, 110, 1001) deletes information relating to the communication apparatus included in the communication apparatus group whose failure is detected from the second storage means.

4. The control apparatus according to claim 1 or 3,
wherein the second storage means further stores, the communication apparatus and a priority order based on a distance between the destination communication apparatus and the transfer apparatus (1121, 1122, 1124) which is located in a boundary of the network, for each communication apparatus included in the communication apparatus group; and
wherein the selecting means selects any one of communication apparatuses in the communication apparatus group (1200) as the destination communication apparatus based on the priority order.

5. The control apparatus according to any one of claims 1 to 4,
wherein the identifier is an IP address.

6. The control apparatus according to any one of claims 1 to 4,
wherein the identifier is an identifier which can distinguish a service provided by the communication apparatus included in the communication apparatus group.

7. The control apparatus according to any one of claims 4 to 6,
wherein the priority order is set based on an RTT (Round Trip Time) between the destination communication apparatus and the transfer apparatus which is located in a boundary of the network with which the source communication apparatus connects.

8. The control apparatus according to any one of claims 4 to 6,
wherein the priority order is set based on an AS (Autonomous System) pass between the transfer apparatus (1121, 1122, 1124) provided outside the network and the destination communication apparatus.

9. A communication system comprising:
a control apparatus for controlling a network; and
a transfer apparatus (1121, 1122, 1124) for transferring packets;
wherein the control apparatus includes a path control means (10, 110, 1001) for selecting a communication apparatus having an identifier as a destination communication apparatus among a communication apparatus group, based on a connection relationship between the communication apparatus group, which is connected to the network and includes communication apparatuses each having the same identifier and a source communication apparatus (130, 1130) which performs communication using the identifier as a destination address, and setting a process corresponding to a path from the source communication apparatus (130, 1130) to the selected destination communication apparatus to the transfer apparatus (1121, 1122, 1124) in the network;
**characterised in that** the path control means (10, 110, 1001) comprises:
a first storage means (17-1) for storing the connection relationship between the communication apparatus and the transfer apparatus (1121, 1122, 1124) which is located in a boundary of the network;
a second storage means (17-2) for storing the communication apparatus having the same identifier among the communication apparatus group by correlating with each transfer apparatus (1121, 1122, 1124) which is located in a boundary of the network or each port provided in the transfer apparatus (1121, 1122, 1124); and
a selecting means for searching for the transfer apparatus, which is located in a boundary of the network and is connected with the source communication apparatus, from the first storage means when communication using the identifier as a destination address is received, and selecting from the second storage means any one of communication apparatuses in the communication apparatus group which is corresponding to the searched transfer apparatus as the destination communication apparatus.

10. The communication system according to claim 9,
wherein the connection relationship includes a connection relationship between the communication apparatus group (1200) and the transfer apparatus (1121, 1122, 1124) which is located in a boundary of the network.

11. The communication system according to claim 9,
wherein the path control means (10, 110, 1001) deletes information relating to the communication apparatus included in the communication apparatus group whose failure is detected from the second storage means.

12. The communication system according to claim 9 or 11,
wherein the second storage means further stores the communication apparatus and a priority order based on a distance between the destination communication apparatus and the transfer apparatus (1121, 1122, 1124) which is located in a boundary of the network, for each communication apparatus included in the communication apparatus group; and
wherein the selecting means selects any one of communication apparatuses in the communication apparatus group as the destination communication apparatus based on the priority order.

13. The communication system according to any one of claims 9 to 12,
wherein the identifier is an IP address.

14. The communication system according to any one of claims 9 to 12,
wherein the identifier is an identifier which can distinguish a service provided by the communication apparatus included in the communication apparatus group.

15. The communication system according to any one of claims 12 to 14,
wherein the priority order is set based on an RTT (Round Trip Time) between the destination communication apparatus and the transfer apparatus which is located in a boundary of the network with which the source communication apparatus connects.

16. A communication method comprising the steps of:
selecting a communication apparatus having an identifier as a destination communication apparatus among a communication apparatus group, based on a connection relationship between the communication apparatus group, which is connected to a network controlled by a control apparatus and includes communication apparatuses each having the same identifier, and a source communication apparatus which performs communication using the identifier as a destination address; and
setting a process corresponding to a path from the source communication apparatus (130, 1130) to the selected destination communication apparatus to a transfer apparatus (1121, 1122, 1124) in the network;
wherein the method is **characterised by** further comprising the steps of: searching for the transfer apparatus (1121, 1122, 1124), which is located in a boundary of the network and is connected with the source communication apparatus, from a first storage means (17-1) for storing the connection relationship between the communication apparatus and the transfer apparatus (1121, 1122, 1124) which is located in a boundary of the network; and
selecting any one of communication apparatuses in the communication apparatus group (1200) which is corresponding to the searched transfer apparatus (1121, 1122, 1124), from a second storage means (17-2) for storing the communication apparatus having the same identifier among the communication apparatus group by correlating with each transfer apparatus (1121, 1122, 1124) which is located in a boundary of the network or each port provided in the transfer apparatus (1121, 1122, 1124).

17. The communication method according to claim 16,
wherein the connection relationship includes a connection relationship between the communication apparatus group (1200) and the transfer apparatus (1121, 1122, 1124) which is located in a boundary of the network.

18. The communication method according to claim 16, further comprising the step of:
deleting information relating to the communication apparatus included in the communication apparatus group (1200) whose failure is detected from the second storage means.

19. The communication method according to claim 16 or 18,
wherein the second storage means further stores the communication apparatus and a priority order based on a distance between the destination communication apparatus and the transfer apparatus (1121, 1122, 1124) which is located in a boundary of the network, for each communication apparatus included in the communication apparatus group; and
wherein the selecting is performed based on the priority order.

20. The communication method according to any one of claims 16 to 19,
wherein the identifier is an IP address.

21. The communication method according to any one of claims 16 to 19,
wherein the identifier is an identifier which can distinguish a service provided by the communication apparatus included in the communication apparatus group.

22. A recording medium having recorded thereon a communication program which when executed by a computer causes said computer to execute a communication method comprising the steps of :
selecting a communication apparatus having an identifier as a destination communication apparatus among a communication apparatus group, based on a connection relationship between the communication apparatus group, which is connected to the network and includes communication apparatuses each having the same identifier and a source communication apparatus which performs communication using the identifier as an address; and
setting a process corresponding to a path from the source communication apparatus to the selected destination communication apparatus to a transfer apparatus (1121, 1122, 1124) in the network;
searching for the transfer apparatus (1121, 1122, 1124), which is located in a boundary of the network and is connected with the source communication apparatus, from a first storage means (17-1) for storing the connection relationship between the communication apparatus and the transfer apparatus (1121, 1122, 1124) which is located in a boundary of the network; and
selecting any one of communication apparatuses in the communication apparatus group (1200) which is corresponding to the searched transfer apparatus (1121, 1122, 1124), from a second storage means (17-2) for storing the communication apparatus having the same identifier among the communication apparatus group by correlating with each transfer apparatus (1121, 1122, 1124) which is located in a boundary of the network or each port provided in the transfer apparatus (1121, 1122, 1124).

## Patentansprüche

1. Steuervorrichtung zum Steuern eines Netzwerks, die Folgendes umfasst:
ein Pfadsteuermittel (10, 110, 1001) zum Auswählen einer Kommunikationsvorrichtung (40, 41, 140, 141, 1040, 1041) mit einer Kennung als Zielkommunikationsvorrichtung unter einer Kommunikationsvorrichtungsgruppe (1200) auf der Basis einer Verbindungsbeziehung zwischen der Kommunikationsvorrichtungsgruppe (1200), die mit dem Netzwerk verbunden ist und Kommunikationsvorrichtungen (40, 41, 140, 141, 1040, 1041) jeweils mit derselben Kennung beinhaltet, und einer Quellkommunikationsvorrichtung (130, 1130), die Kommunikationen mit der Kennung als Zieladresse durchführt, und Einrichten eines Prozesses entsprechend einem Pfad von der Quellkommunikationsvorrichtung (130, 1130) zur gewählten Zielkommunikationsvorrichtung (40, 41, 140, 141, 1040, 1041) zu einer Übertragungsvorrichtung (1121, 1122, 1124) in dem Netzwerk,
**dadurch gekennzeichnet, dass** das Pfadsteuermittel (10, 110, 1001) Folgendes umfasst:
ein erstes Speichermittel (17-1) zum Speichern der Verbindungsbeziehung zwischen der Kommunikationsvorrichtung und der Übertragungsvorrichtung (21, 22, 23, 24, 1121, 1122, 1124), die sich in einer Begrenzung des Netzwerks befindet;
ein zweites Speichermittel (17-2) zum Speichern der Kommunikationsvorrichtung mit derselben Kennung unter der Kommunikationsvorrichtungsgruppe durch Korrelieren mit jeder Übertragungsvorrichtung (1121, 1122, 1124), die sich in einer Begrenzung des Netzwerks befindet, oder jedem in der Übertragungsvorrichtung (1121, 1122, 1124) vorgesehenen Port; und
ein Auswahlmittel zum Suchen nach der Übertragungsvorrichtung (1121, 1122, 1124), die sich in einer Begrenzung des Netzwerks befindet und mit der Quellkommunikationsvorrichtung (130, 1130) verbunden ist, aus dem ersten Speichermittel, wenn Kommunikationen mit der Kennung als Zieladresse empfangen werden, und Auswählen, aus dem zweiten Speichermittel, einer beliebigen Kommunikationsvorrichtung in der Kommunikationsvorrichtungsgruppe, die der gesuchten Übertragungsvorrichtung (1121, 1122, 1124) entspricht, als Zielkommunikationsvorrichtung.

2. Steuervorrichtung nach Anspruch 1,
wobei die Verbindungsbeziehung eine Verbindungsbeziehung zwischen der Kommunikationsvorrichtungsgruppe (1200) und der Übertragungsvorrichtung (1121, 1122, 1124) beinhaltet, die sich in einer Begrenzung des Netzwerks befindet.

3. Steuervorrichtung nach Anspruch 1,
wobei das Pfadsteuermittel (10, 110, 1001) Informationen über die Kommunikationsvorrichtung löscht, die in der Kommunikationsvorrichtungsgruppe enthalten ist, deren Ausfall vom zweiten Speichermittel erkannt wird.

4. Steuervorrichtung nach Anspruch 1 oder 3,
wobei das zweite Speichermittel ferner die Kommunikationsvorrichtung und eine Prioritätsfolge auf der Basis einer Entfernung zwischen der Zielkommunikationsvorrichtung und der Übertragungsvorrichtung (1121, 1122, 1124), die sich in einer Begrenzung des Netzwerks befindet, für jede in der Kommunikationsvorrichtungsgruppe enthaltene Kommunikationsvorrichtung speichert; und
wobei das Auswahlmittel eine beliebige Kommunikationsvorrichtung in der Kommunikationsvorrichtungsgruppe (1200) als die Zielkommunikationsvorrichtung auf der Basis der Prioritätsfolge auswählt.

5. Steuervorrichtung nach einem der Ansprüche 1 bis 4, wobei die Kennung eine IP-Adresse ist.

6. Steuervorrichtung nach einem der Ansprüche 1 bis 4, wobei die Kennung eine Kennung ist, die einen von der in der Kommunikationsvorrichtungsgruppe enthaltenen Kommunikationsvorrichtung bereitgestellten Dienst unterscheiden kann.

7. Steuervorrichtung nach einem der Ansprüche 4 bis 6, wobei die Prioritätsfolge auf der Basis einer RTT (Umlaufzeit) zwischen der Zielkommunikationsvorrichtung und der Übertragungsvorrichtung eingestellt wird, die sich in einer Begrenzung des Netzwerks befindet, mit dem die Quellvorrichtung verbunden ist.

8. Steuervorrichtung nach einem der Ansprüche 4 bis 6, wobei die Prioritätsfolge auf der Basis eines AS-(Autonomous System)-Durchgangs zwischen der außerhalb des Netzwerks vorgesehenen Übertragungsvorrichtung (1121, 1122, 1124) und der Zielkommunikationsvorrichtung eingestellt wird.

9. Kommunikationssystem, das Folgendes umfasst:
eine Steuervorrichtung zum Steuern eines Netzwerks; und
eine Übertragungsvorrichtung (1121, 1122, 1124) zum Übertragen von Paketen;
wobei die Steuervorrichtung ein Pfadsteuermittel (10, 110, 1001) zum Auswählen einer Kommunikationsvorrichtung mit einer Kennung als Zielkommunikationsvorrichtung unter einer Kommunikationsvorrichtungsgruppe auf der Basis einer Verbindungsbeziehung zwischen der Kommunikationsvorrichtungsgruppe, die mit dem Netzwerk verbunden ist und Kommunikationsvorrichtungen jeweils mit derselben Kennung beinhaltet, und eine Quellkommunikationsvorrichtung (130, 1130) beinhaltet, die Kommunikationen mit der Kennung als Zieladresse durchführt, und Einstellen eines Prozesses entsprechend einem Pfad von der Quellkommunikationsvorrichtung (130, 1130) zu der gewählten Zielkommunikationsvorrichtung zur Übertragungsvorrichtung (1121, 1122, 1124) in dem Netzwerk;
**dadurch gekennzeichnet, dass** das Pfadsteuermittel (10, 110, 1001) Folgendes umfasst:
ein erstes Speichermittel (17-1) zum Speichern der Verbindungsbeziehung zwischen der Kommunikationsvorrichtung und der Übertragungsvorrichtung (1121, 1122, 1124), die sich in einer Begrenzung des Netzwerks befindet;
ein zweites Speichermittel (17-2) zum Speichern der Kommunikationsvorrichtung mit derselben Kennung unter der Kommunikationsvorrichtungsgruppe durch Korrelieren mit jeder Übertragungsvorrichtung (1121, 1122, 1124), die sich in einer Begrenzung des Netzwerks befindet, oder jedem in der Übertragungsvorrichtung (1121, 1122, 1124) bereitgestellten Port; und
ein Auswahlmittel zum Suchen nach der Übertragungsvorrichtung, die sich in einer Begrenzung des Netzwerks befindet und mit der Quellkommunikationsvorrichtung verbunden ist, aus dem ersten Speichermittel, wenn Kommunikationen mit der Kennung als Zieladresse empfangen werden, und Auswählen, aus dem zweiten Speichermittel, einer beliebigen Kommunikationsvorrichtung in der Kommunikationsvorrichtungsgruppe, die der gesuchten Übertragungsvorrichtung entspricht, als Zielkommunikationsvorrichtung.

10. Kommunikationssystem nach Anspruch 9,
wobei die Verbindungsbeziehung eine Verbindungsbeziehung zwischen der Kommunikationsvorrichtungsgruppe (1200) und der Übertragungsvorrichtung (1121, 1122, 1124) beinhaltet, die sich in einer Begrenzung des Netzwerks befindet.

11. Kommunikationssystem nach Anspruch 9,
wobei das Pfadsteuermittel (10, 110, 1001) Informationen über die in der Kommunikationsvorrichtungsgruppe enthaltene Kommunikationsvorrichtung löscht, deren Ausfall vom zweiten Speichermittel erkannt wird.

12. Kommunikationssystem nach Anspruch 9 oder 11,
wobei das zweite Speichermittel ferner die Kommunikationsvorrichtung und eine Prioritätsfolge auf der Basis einer Entfernung zwischen der Zielkommunikationsvorrichtung und der Übertragungsvorrichtung (1121, 1122, 1124), die sich in einer Begrenzung des Netzwerks befindet, für jede in der Kommunikationsvorrichtungsgruppe enthaltene Kommunikationsvorrichtung speichert; und
wobei das Auswahlmittel eine beliebige Kommunikationsvorrichtung in der Kommunikationsvorrichtungsgruppe als Zielkommunikationsvorrichtung auf der Basis der Prioritätsfolge auswählt.

13. Kommunikationssystem nach einem der Ansprüche 9 bis 12, wobei die Kennung eine IP-Adresse ist.

14. Kommunikationssystem nach einem der Ansprüche 9 bis 12, wobei die Kennung eine Kennung ist, die einen von der in der Kommunikationsvorrichtungsgruppe enthaltenen Kommunikationsvorrichtung vorgesehenen Dienst unterscheiden kann.

15. Kommunikationssystem nach einem der Ansprüche 12 bis 14, wobei die Prioritätsfolge auf der Basis einer RTT (Umlaufzeit) zwischen der Zielkommunikationsvorrichtung und der Übertragungsvorrichtung eingestellt wird, die sich in einer Begrenzung des Netzwerks befindet, mit dem die Quellkommunikationsvorrichtung verbunden ist.

16. Kommunikationsverfahren, das die folgenden Schritte beinhaltet:
Auswählen einer Kommunikationsvorrichtung mit einer Kennung als Zielkommunikationsvorrichtung unter einer Kommunikationsvorrichtungsgruppe auf der Basis einer Verbindungsbeziehung zwischen der Kommunikationsvorrichtungsgruppe, die mit einem Netzwerk verbunden ist, das von einer Steuervorrichtung gesteuert wird und Kommunikationsvorrichtungen jeweils mit derselben Kennung beinhaltet, und einer Quellkommunikationsvorrichtung, die Kommunikationen mit der Kennung als Zieladresse durchführt; und
Einstellen eines Prozesses entsprechend einem Pfad von der Quellkommunikationsvorrichtung (130, 1130) zur gewählten Zielkommunikationsvorrichtung zu einer Übertragungsvorrichtung (1121, 1122, 1124) in dem Netzwerk;
wobei das Verfahren **dadurch gekennzeichnet ist, dass** es ferner die folgenden Schritte beinhaltet:
Suchen der Übertragungsvorrichtung (1121, 1122, 1124), die sich in einer Begrenzung des Netzwerks befindet und mit der Quellkommunikationsvorrichtung verbunden ist, aus einem ersten Speichermittel (17-1) zum Speichern der Verbindungsbeziehung zwischen der Kommunikationsvorrichtung und der Übertragungsvorrichtung (1121, 1122, 1124), die sich in einer Begrenzung des Netzwerks befindet; und
Auswählen einer beliebigen Kommunikationsvorrichtung in der Kommunikationsvorrichtungsgruppe (1200), die der gesuchten Übertragungsvorrichtung (1121, 1122, 1124) entspricht, aus einem zweiten Speichermittel (17-2) zum Speichern der Kommunikationsvorrichtung mit derselben Kennung unter der Kommunikationsvorrichtungsgruppe durch Korrelieren mit jeder Übertragungsvorrichtung (1121, 1122, 1124), die sich in einer Begrenzung des Netzwerks befindet, oder jedem in der Übertragungsvorrichtung (1121, 1122, 1124) bereitgestellten Port.

17. Kommunikationsverfahren nach Anspruch 16,
wobei die Verbindungsbeziehung eine Verbindungsbeziehung zwischen der Kommunikationsvorrichtungsgruppe (1200) und der Übertragungsvorrichtung (1121, 1122, 1124) beinhaltet, die sich in einer Begrenzung des Netzwerks befindet.

18. Kommunikationsverfahren nach Anspruch 16, das ferner den folgenden Schritt beinhaltet:
Löschen von Informationen über die in der Kommunikationsvorrichtungsgruppe (1200) enthaltene Kommunikationsvorrichtung, deren Ausfall vom zweiten Speichermittel erkannt wird.

19. Kommunikationsverfahren nach Anspruch 16 oder 18,
wobei das zweite Speichermittel ferner die Kommunikationsvorrichtung und eine Prioritätsfolge auf der Basis einer Entfernung zwischen der Zielkommunikationsvorrichtung und der Übertragungsvorrichtung (1121, 1122, 1124), die sich in einer Begrenzung des Netzwerks befindet, für jede in der Kommunikationsvorrichtungsgruppe enthaltene Kommunikationsvorrichtung speichert; und
wobei das Auswählen auf der Basis der Prioritätsfolge durchgeführt wird.

20. Kommunikationsverfahren nach einem der Ansprüche 16 bis 19, wobei die Kennung eine IP-Adresse ist.

21. Kommunikationsverfahren nach einem der Ansprüche 16 bis 19, wobei die Kennung eine Kennung ist, die einen von der in der Kommunikationsvorrichtungsgruppe enthaltenen Kommunikationsvorrichtung bereitgestellten Dienst unterscheiden kann.

22. Aufzeichnungsmedium, auf dem ein Kommunikationsprogramm aufgezeichnet ist, das bei Ausführung durch einen Computer bewirkt, dass der Computer ein Kommunikationsverfahren ausführt, das die folgenden Schritte beinhaltet:
Auswählen einer Kommunikationsvorrichtung mit einer Kennung als Zielkommunikationsvorrichtung unter einer Kommunikationsvorrichtungsgruppe auf der Basis einer Verbindungsbeziehung zwischen der Kommunikationsvorrichtungsgruppe, die mit dem Netzwerk verbunden ist und Kommunikationsvorrichtungen jeweils mit derselben Kennung beinhaltet, und eine Quellkommunikationsvorrichtung, die Kommunikationen mit der Kennung als Adresse durchführt; und
Einstellen eines Prozesses entsprechend einem Pfad von der Quellkommunikationsvorrichtung zur gewählten Zielkommunikationsvorrichtung zu einer Übertragungsvorrichtung (1121, 1122, 1124) in dem Netzwerk;
Suchen nach der Übertragungsvorrichtung (1121, 1122, 1124), die sich in einer Begrenzung des Netzwerks befindet und mit der Quellkommunikationsvorrichtung verbunden ist, aus einem ersten Speichermittel (17-1) zum Speichern der Verbindungsbeziehung zwischen der Kommunikationsvorrichtung und der Übertragungsvorrichtung (1121, 1122, 1124), die sich in einer Begrenzung des Netzwerks befindet; und
Auswählen einer beliebigen Kommunikationsvorrichtung in der Kommunikationsvorrichtungsgruppe (1200), die der gesuchten Übertragungsvorrichtung (1121, 1122, 1124) entspricht, aus einem zweiten Speichermittel (17-2) zum Speichern der Kommunikationsvorrichtung mit derselben Kennung unter der Kommunikationsvorrichtungsgruppe durch Korrelieren mit jeder Übertragungsvorrichtung (1121, 1122, 1124), die sich in einer Begrenzung des Netzwerks befindet, oder jedem in der Übertragungsvorrichtung (1121, 1122, 1124) bereitgestellten Port.

## Revendications

1. Appareil de commande destiné à commander un réseau, comprenant :
un moyen de commande de chemin (10, 110, 1001) pour sélectionner un appareil de communication (40, 41, 140, 141, 1040, 1041) ayant un identificateur en tant qu'appareil de communication de destination parmi un groupe d'appareils de communication (1200), sur la base d'une relation de connexion entre le groupe d'appareils de communication (1200), qui est connecté au réseau et comprend des appareils de communication (40, 41, 140, 141, 1040, 1041) ayant chacun le même identificateur, et un appareil de communication source (130, 1130) qui effectue une communication en utilisant l'identificateur en tant qu'adresse de destination, et établir un processus correspondant à un chemin de l'appareil de communication source (130, 1130) à l'appareil de communication de destination sélectionné (40, 41, 140, 141, 1040, 1041) à un appareil de transfert (1121, 1122, 1124) dans le réseau,
**caractérisé en ce que** le moyen de commande de chemin (10, 110, 1001) comprend :
un premier moyen de stockage (17-1) pour stocker la relation de connexion entre l'appareil de communication et l'appareil de transfert (21, 22, 23, 24, 1121, 1122, 1124) qui est situé à une frontière du réseau ;
un deuxième moyen de stockage (17-2) pour stocker l'appareil de communication ayant le même identificateur parmi le groupe d'appareils de communication en le mettant en corrélation avec chaque appareil de transfert (1121, 1122, 1124) qui est situé à une frontière du réseau ou bien avec chaque port fourni dans l'appareil de transfert (1121, 1122,1124); et
un moyen de sélection pour rechercher l'appareil de transfert (1121, 1122, 1124), qui est situé à une frontière du réseau et qui est connecté à l'appareil de communication source (130, 1130), dans le premier moyen de stockage lorsqu'une communication utilisant l'identificateur comme une adresse de destination est reçue, et sélectionner dans le deuxième moyen de stockage l'un quelconque des appareils de communication dans le groupe d'appareils de communication qui correspond à l'appareil de transfert recherché (1121, 1122, 1124) comme l'appareil de communication de destination.

2. Appareil de commande selon la revendication 1,
dans lequel la relation de connexion comprend une relation de connexion entre le groupe d'appareils de communication (1200) et l'appareil de transfert (1121, 1122, 1124) qui est situé à une frontière du réseau.

3. Appareil de commande selon la revendication 1,
dans lequel le moyen de commande de chemin (10, 110, 1001) supprime des informations se rapportant à l'appareil de communication inclus dans le groupe d'appareils de communication dont la défaillance est détectée dans le deuxième moyen de stockage.

4. Appareil de commande selon la revendication 1 ou 3,
dans lequel le deuxième moyen de stockage stocke en outre, l'appareil de communication et un ordre de priorité sur la base d'une distance entre l'appareil de communication de destination et l'appareil de transfert (1121, 1122, 1124) qui est situé à une frontière du réseau, pour chaque appareil de communication inclus dans le groupe d'appareils de communication ; et
dans lequel le moyen de sélection sélectionne l'un quelconque des appareils de communication dans le groupe d'appareils de communication (1200) comme l'appareil de communication de destination sur la base de l'ordre de priorité.

5. Appareil de commande selon l'une quelconque des revendications 1 à 4,
dans lequel l'identificateur est une adresse IP.

6. Appareil de commande selon l'une quelconque des revendications 1 à 4,
dans lequel l'identificateur est un identificateur qui peut distinguer un service fourni par l'appareil de communication inclus dans le groupe d'appareils de communication.

7. Appareil de commande selon l'une quelconque des revendications 4 à 6,
dans lequel l'ordre de priorité est établi sur la base d'un RTT (temps aller-retour) entre l'appareil de communication de destination et l'appareil de transfert qui est situé à une frontière du réseau avec lequel l'appareil de communication source se connecte.

8. Appareil de commande selon l'une quelconque des revendications 4 à 6,
dans lequel l'ordre de priorité est établi sur la base d'un passage AS (système autonome) entre l'appareil de transfert (1121, 1122, 1124) fourni hors du réseau et l'appareil de communication de destination.

9. Système de communication comprenant :
un appareil de commande pour commander un réseau ; et
un appareil de transfert (1121, 1122 1124) pour transférer des paquets ;
dans lequel l'appareil de commande comprend un moyen de commande de chemin (10, 110, 1001) pour sélectionner un appareil de communication ayant un identificateur en tant qu'appareil de communication de destination parmi un groupe d'appareils de communication, sur la base d'une relation de connexion entre le groupe d'appareils de communication, qui est connecté au réseau et comprend des appareils de communication ayant chacun le même identificateur et un appareil de communication source (130, 1130) qui effectue une communication en utilisant l'identificateur en tant qu'adresse de destination, et établir un processus correspondant à un chemin de l'appareil de communication source (130, 1130) à l'appareil de communication de destination sélectionné à l'appareil de transfert (1121, 1122, 1124) dans le réseau,
**caractérisé en ce que** le moyen de commande de chemin (10, 110, 1001) comprend :
un premier moyen de stockage (17-1) pour stocker la relation de connexion entre l'appareil de communication et l'appareil de transfert (1121, 1122, 1124) qui est situé à une frontière du réseau ;
un deuxième moyen de stockage (17-2) pour stocker l'appareil de communication ayant le même identificateur parmi le groupe d'appareils de communication en le mettant en corrélation avec chaque appareil de transfert (1121, 1122, 1124) qui est situé à une frontière du réseau ou bien avec chaque port fourni dans l'appareil de transfert (112, 1122, 1124);et
un moyen de sélection pour rechercher l'appareil de transfert, qui est situé à une frontière du réseau et qui est connecté à l'appareil de communication source, dans le premier moyen de stockage lorsqu'une communication utilisant l'identificateur comme une adresse de destination est reçue, et sélectionner dans le deuxième moyen de stockage l'un quelconque des appareils de communication dans le groupe d'appareils de communication qui correspond à l'appareil de transfert recherché comme l'appareil de communication de destination.

10. Système de communication selon la revendication 9,
dans lequel la relation de connexion comprend une relation de connexion entre le groupe d'appareils de communication (1200) et l'appareil de transfert (1121, 1122, 1124) qui est situé à une frontière du réseau.

11. Système de communication selon la revendication 9,
dans lequel le moyen de commande de chemin (10, 110, 1001) supprime des informations se rapportant à l'appareil de communication inclus dans le groupe d'appareils de communication dont la défaillance est détectée dans le deuxième moyen de stockage.

12. Système de communication selon la revendication 9 ou 11,
dans lequel le deuxième moyen de stockage stocke en outre l'appareil de communication et un ordre de priorité sur la base d'une distance entre l'appareil de communication de destination et l'appareil de transfert (1121, 1122, 1124) qui est situé à une frontière du réseau, pour chaque appareil de communication inclus dans le groupe d'appareils de communication ; et
dans lequel le moyen de sélection sélectionne l'un quelconque des appareils de communication dans le groupe d'appareils de communication comme l'appareil de communication de destination sur la base de l'ordre de priorité.

13. Système de communication selon l'une quelconque des revendications 9 à 12,
dans lequel l'identificateur est une adresse IP.

14. Système de communication selon l'une quelconque des revendications 9 à 12,
dans lequel l'identificateur est un identificateur qui peut distinguer un service fourni par l'appareil de communication inclus dans le groupe d'appareils de communication.

15. Système de communication selon l'une quelconque des revendications 12 à 14,
dans lequel l'ordre de priorité est établi sur un RTT (temps aller-retour) entre l'appareil de communication de destination et l'appareil de transfert qui est situé à une frontière du réseau avec lequel l'appareil de communication source se connecte.

16. Procédé de communication comprenant les étapes consistant à :
sélectionner un appareil de communication ayant un identificateur en tant qu'appareil de communication de destination parmi un groupe d'appareils de communication, sur la base d'une relation de connexion entre le groupe d'appareils de communication, qui est connecté à un réseau commandé par un appareil de commande et comprend des appareils de communication ayant chacun le même identificateur, et un appareil de communication source qui effectue une communication en utilisant l'identificateur en tant qu'adresse de destination ; et
établir un processus correspondant à un chemin de l'appareil de communication source (130, 1130) à l'appareil de communication de destination sélectionné à l'appareil de transfert (1121, 1122, 1124) dans le réseau ;
où le procédé est caractérisé en comprenant en outre les étapes consistant à :
rechercher l'appareil de transfert (1121, 1122, 1124), qui est situé à une frontière du réseau et qui est connecté à l'appareil de communication source, dans le premier moyen de stockage (17-1) pour stocker la relation de connexion entre l'appareil de communication et l'appareil de transfert (1121, 1122, 1124) qui est situé à une frontière du réseau ; et
sélectionner l'un quelconque des appareils de communication dans le groupe d'appareils de communication (1200) qui correspond à l'appareil de transfert recherché (1121, 1122, 1124), dans le deuxième moyen de stockage (17-2) pour stocker l'appareil de communication ayant le même identificateur parmi le groupe d'appareils de communication en le mettant en corrélation avec chaque appareil de transfert (1121, 1122, 1124) qui est situé à une frontière du réseau ou bien avec chaque port fourni dans l'appareil de transfert (1121, 1122, 1124).

17. Procédé de communication selon la revendication 16,
dans lequel la relation de connexion comprend une relation de connexion entre le groupe d'appareils de communication (1200) et l'appareil de transfert (1121, 1122, 1124) qui est situé à une frontière du réseau.

18. Procédé de communication selon la revendication 16, comprenant en outre les étapes consistant à :
supprimer des informations se rapportant à l'appareil de communication inclus dans le groupe d'appareils de communication (1200) dont la défaillance est détectée dans le deuxième moyen de stockage.

19. Procédé de communication selon la revendication 16 ou 18,
dans lequel le deuxième moyen de stockage stocke en outre l'appareil de communication et un ordre de priorité sur la base d'une distance entre l'appareil de communication de destination et l'appareil de transfert (1121, 1122, 1124) qui est situé à une frontière du réseau, pour chaque appareil de communication inclus dans le groupe d'appareils de communication ; et
dans lequel le fait de sélectionner est effectué sur la base de l'ordre de priorité.

20. Procédé de communication selon l'une quelconque des revendications 16 à 19,
dans lequel l'identificateur est une adresse IP.

21. Procédé de communication selon l'une quelconque des revendications 16 à 19,
dans lequel l'identificateur est un identificateur qui peut distinguer un service fourni par l'appareil de communication inclus dans le groupe d'appareils de communication.

22. Support d'enregistrement ayant un programme de communication enregistré dessus qui lorsque exécuté par un ordinateur fait que ledit ordinateur exécute un procédé de communication comprenant les étapes consistant à :
sélectionner un appareil de communication ayant un identificateur en tant qu'appareil de communication de destination parmi un groupe d'appareils de communication, sur la base d'une relation de connexion entre le groupe d'appareils de communication, qui est connecté au réseau et qui comprend des appareils de communication ayant chacun le même identificateur et un appareil de communication source qui effectue une communication en utilisant l'identificateur en tant qu'adresse ; et
établir un processus correspondant à un chemin de l'appareil de communication source à l'appareil de communication de destination sélectionné à un appareil de transfert (1121, 1122, 1124) dans le réseau ;
rechercher l'appareil de transfert (1121, 1122, 1124), qui est situé à une frontière du réseau et qui est connecté à l'appareil de communication source, dans le premier moyen de stockage (17-1) pour stocker la relation de connexion entre l'appareil de communication et l'appareil de transfert (1121, 1122, 1124) qui est situé à une frontière du réseau ; et
sélectionner l'un quelconque des appareils de communication dans le groupe d'appareils de communication (1200) qui correspond à l'appareil de transfert recherché (1121, 1122, 1124), dans le deuxième moyen de stockage (17-2) pour stocker l'appareil de communication ayant le même identificateur parmi le groupe d'appareils de communication en le mettant en corrélation avec chaque appareil de transfert (1121, 1122, 1124) qui est situé à une frontière du réseau ou bien avec chaque port fourni dans l'appareil de transfert (1121, 1122, 1124).
